(19) Europäisches Patentamt
European Patent Office
Office européen des brevets

(11) **EP 3 495 801 A1**

(12) **EUROPÄISCHE PATENTANMELDUNG**

(43) Veröffentlichungstag:
**12.06.2019 Patentblatt 2019/24**

(21) Anmeldenummer: **18206886.6**

(22) Anmeldetag: **19.11.2018**

(51) Int Cl.:
**G01N 21/3577** *(2014.01)* **G01N 21/25** *(2006.01)*
**G01J 3/02** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **08.12.2017 DE 102017222252**

(71) Anmelder: **Robert Bosch GmbH
70442 Stuttgart (DE)**

(72) Erfinder: **Baumgart, Eugen
75385 Bad Teinach-Zavelstein (DE)**

(54) **OPTISCHES ELEMENT, SPEKTROMETRISCHE MESSVORRICHTUNG UND VERFAHREN ZUR SPEKTRALEN ANALYSE EINES MEDIUMS**

(57) Die Erfindung betrifft ein optisches Element (50), umfassend ein erstes lichtführendes Element (53) zum Führen einer von einer Beleuchtungseinheit (120) kommenden Strahlung zu einer Aufnahmevorrichtung (200), in welcher ein zu untersuchendes Medium (300) angeordnet ist und ein zweites lichtführendes Element (54) zum Führen eines Strahlungsanteils, welcher spektrale Informationen über das Medium umfasst, von der Aufnahmevorrichtung (200) zu einer Detektionseinheit (110), wobei das erste lichtführende Element (53) eine erste Endfläche (530) aufweist, welche infolge einer Dimensionierung einen ersten Winkel (531) vorgibt, den ein von der Beleuchtungseinheit (120) kommender und von dem ersten lichtführenden Element (53) führbarer Strahl beim Austritt durch die erste Endfläche (530) aufweist, wobei der erste Winkel (531) dergestalt ist, dass ein Lichtpfad (503) des Strahls, im Medium (300) ein Polygon beschreibt und wobei das zweite lichtführende Element (54) eine zweite Endfläche (540) aufweist, welche infolge einer Dimensionierung einen zweiten Winkel (541) vorgibt, den ein von dem zweiten lichtführenden Element (54) führbarer Strahl beim Eintritt in das zweite lichtführende Element (54) durch die zweite Endfläche (540) aufweist, wobei der zweite Winkel (541) dergestalt ist, dass ein von dem polygonalen Lichtpfad (503) kommender Strahl von dem zweiten lichtführenden Element (54) aufnehmbar und der Detektionseinheit (110) zuführbar ist.

Fig. 4

EP 3 495 801 A1

**Beschreibung**

Stand der Technik

Optische Laborspektrometer werden genutzt, um unterschiedliche Substanzen zerstörungsfrei auf ihre stoffliche Zusammensetzung zu analysieren, wobei ausgenutzt wird, dass Atome und Moleküle bestimmte spektrale Anteile elektromagnetischer Strahlung absorbieren. Im Allgemeinen beruht das Prinzip darauf, dass Proben elektromagnetischer Strahlung ausgesetzt werden und die reflektierte oder transmittierte Strahlungsintensität wellenlängenabhängig gemessen wird. In jüngeren Jahren ist ein Trend zu immer kleiner werdenden Spektrometern festzustellen, die mobil einsetzbar oder tragbar sind. Insbesondere existieren eine Reihe sogenannter Mikro- oder Miniaturspektrometer, deren Größe unterhalb den Abmessungen einer Streichholzschachtel liegen. Manche Modelle besitzen gar Baugrößen unterhalb eines Kubikzentimeters.

Miniaturspektrometer nach dem aktuellen Stand der Technik messen in Reflexion, d.h. das Gerät wird so gehalten, dass Licht von einer integrierten Lichtquelle das zu untersuchende Objekt beleuchtet. Das zurückgestreute Licht wird dann mittels der Eingangsapertur des Spektralsensors wieder aufgesammelt, wobei es vorteilhaft ist, wenn das Licht in die Probe eindringt und mit dieser wechselwirkt. Messungen in klaren Flüssigkeiten können erfolgen, indem das Gerät senkrecht auf die Flüssigkeitsoberfläche gerichtet wird, Probenbehälter (Küvetten) oder spezielle Sonden verwendet werden.

In WO 2015/180891 A1 ist ein Sensor zur Detektion von Wasser in Öl beschrieben. Ein Miniaturspektrometer ist über optische Wellenleiter mit einem Detektorkopf verbunden, welcher in die Probe eingetaucht wird. Das Licht wird von dem ersten Wellenleiter in die Probe eingekoppelt und von der Probe in den zweiten Wellenleiter eingekoppelt, wobei der zweite Wellenleiter das Licht zur Miniaturspektrometer, umfassend eine Detektionseinheit, leitet.

Kern und Vorteile der Erfindung

Die Erfindung betrifft ein optisches Element, eine spektrometrische Messvorrichtung und ein Verfahren zur spektralen Analyse eines Mediums.

Vorteile der Erfindung mit den Merkmalen der unabhängigen Patentansprüche sind, dass eine spektrale Messung eines Mediums, welches beispielsweise in einem für die verwendeten Wellenlängen transparenten Gefäß angeordnet ist, ermöglicht wird, ohne dass die spektrometrische Messvorrichtung mit dem Medium in Kontakt kommt. Die Messung kann dabei insbesondere von außen durch die Gefäßwand hindurch erfolgen, wobei der Modifikationsaufwand an der spektrometrischen Messvorrichtung zur Durchführung der Messung reduziert werden kann. Ein großer Vorteil ist, dass insbesondere auch Messungen von Medien in verschlossenen Gefäßen ermöglicht werden können, ohne dass das Gefäß geöffnet werden muss. Dies ist für viele Anwendungsfälle wie beispielsweise im Supermarkt, Restaurant oder auf einer Veranstaltung, vorteilhaft, um beispielsweise die Zusammensetzung und die Frische von Produkten zerstörungsfrei, d.h. ohne Öffnen des Gefäßes, und berührungsfrei, d.h. ohne dass die Messvorrichtung mit dem Medium in Kontakt kommt, zu ermitteln. Die Erfindung ermöglicht es nach dem "Point and Shoot" Prinzip zu arbeiten, indem die spektrometrische Messvorrichtung zur Durchführung der Messung einfach auf das Gefäß aufgesetzt wird, ohne zuvor ein Messzubehör an dem Gefäß zu installieren oder die spektrometrische Messvorrichtung in die Flüssigkeit einzutauchen.

Dies wird erreicht mit einem optischen Element gemäß Anspruch 1, umfassend ein erstes lichtführendes Element zum Führen einer von einer Beleuchtungseinheit kommenden elektromagnetischen Strahlung zu einer Aufnahmevorrichtung, in welcher ein zu untersuchendes Medium angeordnet ist und ein zweites lichtführendes Element zum Führen eines Strahlungsanteils, welcher spektrale Informationen über das Medium umfasst, von der Aufnahmevorrichtung zu einer Detektionseinheit. Das optische Element zeichnet sich dadurch aus, dass das erste lichtführende Element eine erste Endfläche aufweist, wobei die Aufnahmevorrichtung an der ersten Endfläche des ersten lichtführenden Elements angeordnet oder anordenbar ist, und wobei die erste Endfläche infolge einer Dimensionierung des ersten lichtführenden Elements einen ersten Winkel vorgibt, den ein von der Beleuchtungseinheit kommender und von dem ersten lichtführenden Element führbarer Strahl beim Austritt durch die erste Endfläche aufweist, wobei der erste Winkel dergestalt ist, dass ein Lichtpfad des Strahls, im Medium ein Polygon, insbesondere regelmäßiges Polygon, beschreibt. Das optische Element zeichnet sich des Weiteren dadurch aus, dass das zweite lichtführende Element eine zweite Endfläche aufweist, wobei die Aufnahmevorrichtung an der zweiten Endfläche des zweiten lichtführenden Elements angeordnet oder anordenbar ist, wobei die zweite Endfläche infolge einer Dimensionierung des zweiten lichtführenden Elements einen zweiten Winkel vorgibt, den ein von dem zweiten lichtführenden Element führbarer Strahl beim Eintritt in das zweite lichtführende Element durch die zweite Endfläche aufweist, wobei der zweite Winkel dergestalt ist, dass ein von dem polygonalen Lichtpfad kommender Strahl von dem zweiten lichtführenden Element aufnehmbar und der Detektionseinheit zuführbar ist.

Das optische Element kann eine optische Verbindung zwischen der Aufnahmevorrichtung und einem Miniaturspektrometer realisieren und somit als optisches Verbindungselement verwendet werden. Des Weiteren ermöglicht das optische Element einer Modifikation von Lichtpfaden. Das optische Element kann insbesondere dazu eingerichtet sein, durch das erste lichtführende Element den ersten Winkel einer aus dem optischen Element austretenden elektromagnetischen Strahlung einzustellen. Alternativ oder ergänzend kann das optische Element dazu eingerichtet sein, durch das zweite lichtführende Element als winkelbeschränkendes Element zu wirken, d.h. nur elektromagnetische Strahlung aus einem vorgegebenen Winkelbereich der Detektionseinheit zuzuführen. In einer Ausführungsform ist das optische Element aus einem Material ausgebildet, welches eine hohe Transparenz im verwendeten Wellenlängenbereich aufweist. Alternativ oder ergänzend kann das optische Element aus einem elastischen Material ausgebildet werden, sodass ein Aufsetzen des optischen Elements auf die Aufnahmevorrichtung erleichtert werden kann. Das optische Element kann sich hierbei beispielsweise an die Form der Aufnahmevorrichtung, in dem Bereich in dem es auf die Aufnahmevorrichtung aufgesetzt wird, anpassen.

Die Aufnahmevorrichtung kann beispielsweise ein Behälter oder ein Gefäß, wie ein Trinkglas, eine Flasche, eine Küvette, etc., sein. Der Brechungsindex des Materials, aus dem die Aufnahmevorrichtung ausgebildet ist, kann beispielsweise 1,5 oder 1,6 betragen oder in einem Bereich zwischen 1,5 und 1,6 liegen. Die Aufnahmevorrichtung kann als Material beispielsweise Kalk-Natron-Glas oder Polyethylenterephthalat (PET) umfassen. Kalk-Natron-Glas ist ein typisches Material zur Herstellung von Behälterglas und Trinkgläsern, PET wird beispielsweise bei der Herstellung von Kunststoffflaschen, wie beispielsweise Getränkeflaschen, verwendet. Unter anderem sind Glasbehälter, Trinkgläser und Kunststoffflaschen zur Verwendung als Aufnahmevorrichtung geeignet. Die Aufnahmevorrichtung kann beispielsweise mit einem Deckel verschlossen sein, oder unverschlossen sein, d.h. eine Öffnung hin zur Umgebung aufweisen. Die Aufnahmevorrichtung kann vollständig mit dem zu untersuchenden Medium gefüllt sein oder das zu untersuchende Medium kann bis zu einem Füllstand in der Aufnahmevorrichtung angeordnet sein, so dass die Aufnahmevorrichtung unterhalb des Füllstands mit dem Medium gefüllt ist und oberhalb des Füllstands kein Medium angeordnet ist, wie dies beispielsweise bei einem halbvollen Trinkglas der Fall ist.

Die Dimensionierung des lichtführenden Elements kann neben Abmessungen des lichtführenden Elements, wie beispielsweise Länge, Breite, Höhe und/oder Krümmungsradius, auch ein Material des lichtführenden Elements umfassen. Als Material für das lichtführende Element können beispielsweise Glas, Quarzglas, Kalk-Natron-Glas oder auch Kunststoffe, wie Polyethylenterephthalat (PET) oder optische Polymere, wie beispielsweise Silikon, eingesetzt werden. Insbesondere kann das Material für die zur Messung verwendeten Wellenlängen der elektromagnetischen Strahlung transparent sein und diese somit transmittieren. Die Dimensionierung des lichtführenden Elements kann des Weiteren einen Querschnitt und/oder eine dreidimensionale Form des lichtführende Elements und/ oder der Endfläche des lichtführenden Elements umfassen. Das lichtführende Element kann beispielsweise zumindest abschnittsweise als Parallelepiped, Kegelstumpf, Pyramidenstumpf, Zylinder, etc. ausgeführt sein. Die Endfläche kann beispielsweise rechteckig, quadratisch, kreisförmig, etc. ausgebildet sein oder als Freiformfläche ausgebildet sein.

Als erste Endfläche wird eine Fläche des ersten lichtführenden Elements bezeichnet, durch welche die elektromagnetische Strahlung nach Passieren des ersten lichtführenden Elements in Richtung Aufnahmevorrichtung aus dem ersten lichtführenden Element austritt. Als zweite Endfläche wird eine Fläche des zweiten lichtführenden Elements bezeichnet, durch welche der Strahlungsanteil, welcher spektrale Informationen über das Medium umfasst, in Richtung Detektionseinheit aus der Aufnahmevorrichtung aus- und in das zweite lichtführende Element eintritt. Insbesondere kann das optische Element derart auf die Aufnahmevorrichtung aufgesetzt werden, dass die erste Endfläche und die zweite Endfläche jeweils in mechanischem Kontakt mit der Aufnahmevorrichtung stehen. Somit kann an der ersten Endfläche ein Austreten der elektromagnetischen Strahlung aus dem lichtführenden Element sowie ein Einkoppeln der elektromagnetischen Strahlung in die Aufnahmevorrichtung ermöglicht werden und an der zweiten Endfläche ein Auskoppeln des Strahlungsanteils aus der Aufnahmevorrichtung sowie ein Eintreten in das zweite lichtführende Element ermöglicht werden. Alternativ oder ergänzend können das erste lichtführende Element und/oder das zweite lichtführende Element abschnittsweise als Lichtwellenleiter ausgeführt sein. Dadurch kann die von der Beleuchtungseinheit kommende elektromagnetische Strahlung zuverlässig zur Aufnahmevorrichtung geführt werden und/oder der Strahlungsanteil, welcher spektrale Informationen über das Medium umfasst, zuverlässig von der Aufnahmevorrichtung zur Detektionseinheit geführt werden. Ein Vorteil ist, dass die Beleuchtungseinheit und/oder die Detektionseinheit in einem großen Toleranzbereich relativ zum optischen Element oder auch beabstandet zum optischen Element angeordnet werden können und dennoch die elektromagnetische Strahlung zuverlässig zu der Aufnahmevorrichtung hingeführt und/oder zuverlässig von der Aufnahmevorrichtung weggeführt werden kann. Somit können vorteilhafterweise Strahlungsverluste reduziert oder vermieden werden. Zur Optimierung eines Brechzahlunterschiedes kann zwischen dem Abschnitt des lichtführenden Elements, der als Wellenleiter ausgeführt ist, und der umgebenden Atmosphäre eine Ummantelung angeordnet werden. In diesem Fall weist das lichtführende Element abschnittsweise einen Kern und einen den Kern umschließenden Mantel auf.

Der erste Winkel ist der Winkel unter dem ein von dem ersten lichtführenden Element geführter Strahl an der ersten Endfläche aus dem ersten lichtführenden Element austritt. Der erste Winkel wird relativ zu einer Oberflächennormalen in dem Punkt, in dem der Strahl durch die erste Endfläche aus dem ersten lichtführenden Element austritt angegeben. Liegt die erste Endfläche an der Aufnahmevorrichtung an, stimmt der erste Winkel mit dem Winkel überein, mit dem der Strahl auf die Aufnahmevorrichtung auftrifft. Stimmen der Brechungsindex des ersten lichtführenden Elements und der Aufnahmevorrichtung überein, so wird der Strahl beim Eintritt in die Aufnahmevorrichtung nicht gebrochen. Beträgt der Brechungsindexunterschied der Materialien des ersten lichtführenden Elements und der Aufnahmevorrichtung 0,1 oder weniger als 0,1, so kann die Brechung des Strahls beim Eintritt in die Aufnahmevorrichtung vernachlässigt werden.

Der zweite Winkel ist der Winkel unter dem von dem zweiten lichtführenden Element geführter Strahl, beim Eintritt in das lichtführende Element durch die zweite Endfläche aufweist. Der zweite Winkel wird relativ zu einer Oberflächennormalen in dem Punkt, in dem der Strahl durch die zweite Endfläche in das zweite lichtführende Element eintritt, angegeben. Liegt die zweite Endfläche an der Aufnahmevorrichtung an, stimmt der zweite Winkel mit dem Winkel überein, mit dem der Strahl aus der Aufnahmevorrichtung austritt. Stimmen der Brechungsindex des zweiten lichtführenden Elements und der Aufnahmevorrichtung überein, so wird der Strahl beim Eintritt in das zweite lichtführende Element nicht gebrochen. Beträgt der Brechungsindexunterschied der Materialien des ersten lichtführenden Elements und der Aufnahmevorrichtung 0,1 oder weniger als 0,1, so kann die Brechung des Strahls beim Eintritt in das zweite lichtführende Element vernachlässigt werden.

Durch definiertes Abschrägen oder Formen der Endfläche des ersten und zweiten lichtführenden Elements bei der Herstellung der lichtführenden Elemente können der erste Winkel und der zweite Winkel vorgegeben werden. Die Dimensionierung der Endflächen kann insbesondere ein Winkelintervall der ersten bzw. zweiten Winkel vorgeben. Die lichtführenden Elemente wirken als winkeleinschränkende Elemente. Durch die Dimensionierung des ersten lichtführenden Elements, welche auch die Form und Abmessungen der ersten Endfläche umfassen kann, kann somit vorgegeben werden, unter welchen Winkeln die von dem ersten lichtführenden Element geführte und aus dem ersten lichtführenden Element austretende Strahlung auf die Aufnahmevorrichtung auftrifft. Das heißt, durch die Dimensionierung kann insbesondere ein Winkelintervall mit ersten Winkeln vorgegeben werden, welche die auf die Aufnahmevorrichtung auftreffenden Strahlen aufweisen können. Durch die Dimensionierung des ersten lichtführenden Elements kann somit ein Winkelbereich der von der Aufnahmevorrichtung hin zum Medium transmittierten Strahlen eingeschränkt werden. Die Dimensionierung ist so gewählt, dass die Strahlen gemäß den Gesetzen der Optik (Snellius'schen Brechungsgesetz) im Medium auf einen polygonalen Lichtpfad geführt werden. Durch die Dimensionierung des zweiten lichtführenden Elements, welche auch die Form und Abmessungen der zweiten Endfläche umfasst, kann vorgegeben werden, welche Strahlen in das zweite lichtführende Element durch die zweite Endfläche eintreten und vom zweiten lichtführenden Element zur Detektionseinheit geführt werden. Das heißt, durch die Dimensionierung kann insbesondere eine Winkelintervall mit zweitem Winkeln vorgegeben werden, welche die Strahlen aufweisen, welche von dem zweiten lichtführenden Element zur Detektionseinheit geführt werden sollen. Dadurch kann ermöglicht werden, dass nur Strahlen, welche von dem polygonalen Lichtpfad im Medium kommen, zur Detektionseinheit geführt werden. Das Winkelintervall und folglich die Dimensionierung ist so gewählt, dass das Winkelintervall Strahlen umfasst, welche gemäß den Gesetzen der Optik (Snellius'schen Brechungsgesetz) von dem polygonalen Lichtpfad im Medium kommen und von der Aufnahmevorrichtung transmittiert wurden. Insbesondere werden Strahlen mit Winkeln außerhalb des Winkelintervalls nicht vom zweiten lichtführenden Element zur Detektionseinheit geführt.

Unter einem polygonalen Lichtpfad wird ein Lichtpfad verstanden, der entlang eines Vielecks, insbesondere eines regelmäßigen Vielecks, verläuft. Der von dem polygonalen Lichtpfad kommende Strahlungsanteil kann Strahlen umfassen, welche zumindest abschnittsweise entlang des polygonalen Lichtpfads verlaufen sind. Alternativ oder ergänzend kann der von dem polygonalen Lichtpfad kommende Strahlungsanteil Strahlen umfassen, welche den polygonalen Lichtpfad zumindest abschnittsweise mehrfach durchlaufen haben.

Ein Vorteil ist, dass das optische Element den Beleuchtungspfad und den Detektionspfad, durch den vorgegebenen ersten Winkel und den vorgegebenen zweiten Winkel derart modifiziert, dass die von der Beleuchtungseinheit kommende elektromagnetische Strahlung in eine Wand der Aufnahmevorrichtung eingekoppelt wird und durch Totalreflektion an der Grenzfläche zwischen der Wand und einer Umgebung, in der die Aufnahmevorrichtung angeordnet ist, beispielsweise Luft, durch mehrfache Reflexion in der Wand propagiert. Befindet sich ein Medium in der Aufnahmevorrichtung, wie eine Flüssigkeit, beispielsweise eine wässrige Lösung, kann die in die Wand der Aufnahmevorrichtung eingekoppelte elektromagnetische Strahlung aufgrund des geringeren Brechungsindexunterschieds aus der Wand der Aufnahmevorrichtung in das Medium eindringen und dort spektrale Informationen über das Medium sammeln.

In einer Ausführungsform ist das optische Element M-förmig ausgebildet, wobei das erste lichtführende Element einen ersten Außenschenkel des M darstellt das zweite lichtführende Element einen zweiten Außenschenkel des M darstellt. Ein Vorteil ist, dass in einem Steg, welcher das erste lichtführende Element und das zweite lichtführende Element mechanisch miteinander verbindet, zwischen der ersten Endfläche und der zweiten Endfläche eine Vertiefung bzw. eine Kerbe ausgebildet ist, was die Elastizität des optischen Elements erhöht und somit das Aufsetzen des optischen Elements auf die Aufnahmevorrichtung erleichtert.

Gemäß einer Ausführungsform ist das erste lichtführende Element aus einem Material ausgebildet, welches einen Brechungsindex von 1,5 oder 1,6 oder einen Brechungsindex im Intervall zwischen 1,5 und 1,6 aufweist. Alternativ oder ergänzend ist das zweite lichtführende Element aus einem Material ausgebildet, welches einen Brechungsindex von 1,5 oder 1,6 oder einen Brechungsindex im Intervall zwischen 1,5 und 1,6 aufweist. Ein Vorteil ist, dass die lichtführenden Elemente somit einen ähnlichen Brechungsindex wie gängige Aufnahmevorrichtungen, wie PET-Flaschen und Glasbehältnisse, aufweisen und somit ein aus dem ersten lichtführenden Element austretende Lichtstrahl mit vernachlässigbarem Reflexionsverlust in die Aufnahmevorrichtung, d.h. in die Wand der Aufnahmevorrichtung eingekoppelt werden kann und ein aus der Aufnahmevorrichtung ausgekoppelter Lichtstrahl mit vernachlässigbarem Reflexionsverlust in das zweite lichtführende Element eintreten kann. Ein Vorteil ist, dass somit Strahlungsverluste im optischen Element reduziert werden können.

Das optische Element kann in einer Ausführungsform aus einem optischen Polymer ausgebildet sein. Beispielsweise kann das optische Element aus Silikon ausgebildet sein. Solche optischen Polymeren können durch geeignete Synthese mit den gewünschten Eigenschaften versehen werden. Ein Vorteil ist, dass das optische Element an die Anforderungen, wie beispielsweise das Einsatzgebiet und die geplanten Anwendungsfälle, angepasst werden kann.

Gemäß einer Ausführungsform kann das optische Element ein Verbindungselement umfassen, wobei das erste lichtführende Element und das zweite lichtführende Element jeweils in oder an dem Verbindungselement befestigt sind. Ein Vorteil ist, dass das optische Element mittels des Verbindungselements auf einfache und zuverlässige Weise relativ zu der Beleuchtungseinheit und der Detektionseinheit anordenbar ist.

Das Verbindungselement kann beispielsweise ein starres Gehäuse umfassen. Das Verbindungselement kann eine erste Seite und eine zweite der ersten Seite gegenüberliegenden Seite umfassen, wobei an der ersten Seite das erste lichtführende Element und das zweite lichtführende Element angeordnet sind und an der zweiten Seite die Beleuchtungseinheit und die Detektionseinheit anordenbar sind. Das erste lichtführende Element kann abschnittsweise einen Lichtwellenleiter umfassen, welcher in dem Verbindungselement angeordnet ist und sich von der ersten Seite hin zur zweiten Seite erstreckt, wobei die Beleuchtungseinheit auf der zweiten Seite an dem Wellenleiter des ersten lichtführenden Elements anordenbar ist. Alternativ oder ergänzend kann das zweite lichtführende Element abschnittsweise einen Wellenleiter umfassen, welcher in dem Verbindungselement angeordnet ist und sich von der ersten Seite hin zur zweiten Seite erstreckt, wobei die Detektionseinheit auf der zweiten Seite an dem Wellenleiter des zweiten lichtführenden Elements anordenbar ist. Ein Vorteil ist, dass durch die Verwendung von Wellenleitern ein flexibles Anordnen der Beleuchtungseinheit und der Detektionseinheit ermöglicht werden kann. Des Weiteren ermöglichen die Wellenleiter ein einfaches und zuverlässiges Verbinden der Beleuchtungs- und Detektionseinheit mit dem optischen Element und ein einfaches und zuverlässiges Trennen der Beleuchtungs- und Detektionseinheit von dem optischen Element. Somit wird auch die Verwendung des optischen Elements von ungeschulten Benutzern ermöglicht.

In einer Ausführungsform ist das optische Element im Strahlengang zwischen der Aufnahmevorrichtung und einem Miniaturspektrometer, umfassend eine Beleuchtungseinheit, mindestens ein spektrales Element und eine Detektionseinheit angeordnet oder anordenbar. Insbesondere kann das Verbindungselement an dem Miniaturspektrometer angeordnet oder anordenbar sein. Gemäß einer Ausführungsform umfasst das Miniaturspektrometer ein Deckglas, welches die Beleuchtungseinheit und die Detektionseinheit abdeckt. Das Verbindungselement kann in diesem Fall beispielsweise auf das Deckglas aufgesteckt oder geklemmt werden.

Alternativ oder ergänzend kann das Verbindungselement mindestens ein Steckelement zum Aufstecken des Verbindungselements auf das Miniaturspektrometer umfassen. Ein Steckelement kann beispielsweise eine Nut, eine Vertiefung, eine Aussparung, Erhebungen, etc. umfassen. Insbesondere kann das Steckelement als Gegenstück zu einer Befestigungsvorrichtung am Miniaturspektrometer ausgebildet sein. Beispielsweise kann somit zwischen dem Miniaturspektrometer und dem Verbindungselement eine Nut-und-Feder-Verbindung hergestellt werden. Ein Vorteil ist, dass somit eine feste und zuverlässige Verbindung zwischen dem Miniaturspektrometer und dem optischen Element herstellbar ist.

Eine spektrometrische Messvorrichtung, welche zur Erfassung spektrometrischer Daten des Mediums eingerichtet ist, umfasst das optische Element, beispielsweise gemäß einer der vorstehend beschriebenen Ausführungsformen, und ein Miniaturspektrometer. Das Miniaturspektrometer umfasst eine Beleuchtungseinheit, wobei die Beleuchtungseinheit eine optische Kopplung zu dem ersten lichtführenden Element aufweist und dazu eingerichtet ist elektromagnetische Strahlung zur Beleuchtung des Mediums bereitzustellen. Des Weiteren umfasst das Miniaturspektrometer eine Detektionseinheit, wobei die Detektionseinheit eine optische Kopplung zu dem zweiten lichtführenden Element aufweist und dazu eingerichtet ist, vom Medium kommende elektromagnetische Strahlung zu detektieren. Ein Vorteil ist, dass eine spektrale Messung des Mediums, welches beispielsweise in einem für die verwendeten Wellenlängen transparenten Gefäß angeordnet ist, ermöglicht wird, ohne dass die spektrometrische Messvorrichtung mit dem Medium in Kontakt kommt. Weitere Vorteile der spektrometrischen Messvorrichtung ergeben sich aus den zuvor genannten Vorteilen des optischen Elements.

Miniaturspektrometer sind dazu eingerichtet, Strahlungseigenschaften in Abhängigkeit der Wellenlänge der von dem Medium kommenden Strahlung zu messen. Das Miniaturspektrometer umfasst eine Beleuchtungseinheit, welche dazu eingerichtet ist, das Medium mit elektromagnetischer Strahlung zu bestrahlen. Des Weiteren umfasst das Miniaturspektrometer eine Detektionseinheit, welche dazu eingerichtet ist eine vom Medium kommende elektromagnetische Strahlung zu detektieren

Die Beleuchtungseinheit kann mindestens eine Lichtquelle umfassen, wobei beispielsweise Glühlampen, thermische Emitter, Laser, eine oder mehrere Leuchtdioden (LED), LEDs mit Phosphorbeschichtung und/oder Plasmastrahlungsquellen, etc. als Lichtquellen verwendet werden können. Die Beleuchtungseinheit und/oder die Detektionseinheit können ein spektrales Element umfassen.

Das spektrale Element kann beispielsweise ein Fabry-Pérot Interferometer, ein Gitterspektrometer, ein Transmissionsfilter ein statisches oder bewegliches Fourier-Transformationsspektrometer oder einen anderen wellenlängenselektiven Filter umfassen.

Die Detektionseinheit kann ein Detektorelement oder ein Detektorarray, welches mehrere Detektorelemente umfasst, umfassen. Als Detektorelement kann ein Strahlungssensor beispielsweise basierend auf Silizium (Si), Germanium (Ge), Germanium auf Silizium, Indium-Gallium-Arsenid (InGaAs), Bleiselenit (PbSe) verwendet werden. Als Strahlungssensoren eignen sich beispielsweise auch Fotodioden oder Bolometer. Strahlungssensoren können in Abhängigkeit einer Eigenschaft der auf den Strahlungssensor auftreffenden elektromagnetischen Strahlung ein elektrisches Signal ausgeben, welches ein Maß für die Strahlungseigenschaft ist. Strahlungssensoren können beispielsweise eine Intensität oder eine Energieflussdichte der detektierten elektromagnetischen Strahlung messen.

Im Folgenden wird unter einem Miniaturspektrometer ein eigenständiges Gerät von wenigen Zentimetern Kantenlänge verstanden, welches über ein spektralsensitives Modul verfügt oder ein Smartphone bei dem ein solches Modul eingebaut ist. Der Begriff Miniaturspektrometer beschreibt im Folgenden das gesamte Gerät mitsamt peripherer Elektronik und Kommunikationsschnittstelle (Bluetooth, Wifi, USB ....), das in der Hand gehalten wird, wie beispielsweise ein Smartphone mit integrierter Beleuchtungs- und Detektionseinheit, wobei die Beleuchtungs- und/oder die Detektionseinheit ein spektrales Element umfassen.

Unter dem Begriff Smartphone sind hierbei Geräte zu verstehen, welche die Funktionen und Funktionsbaugruppen eines Mobiltelefons mit einem PDA (Personal Digital Assistant) kombinieren. Sie sind mit mindestens einer Digitalkamera, GPS- und WLAN-Empfänger und interner Energieversorgungsquelle ausgerüstet und weisen neben dem Prozessor mehrere Datenspeicher auf, beispielsweise einen sehr schnellen, aber flüchtigen Hauptspeicher (RAM), einen nichtflüchtigen NAND-Flash-Speicher für ein Betriebssystem und Programme, und optional Wechseldatenträger, z. B. in Form von Massenspeichern. Zusätzlich zum Betriebssystem kann der Nutzer Applikationsprogramme (Apps) installieren. Die Synchronisation der Daten mit externen Datenspeichern und Datenverarbeitungseinrichtungen ist möglich.

Die vom Miniaturspektrometer ermittelten Daten werden entweder im Miniaturspektrometer selber mittels einer Rechnerleistung ausgewertet oder z. B. über Mobilfunk an eine Empfangseinheit übertragen, dort ausgewertet und ggf. zurück zum Miniaturspektrometer übertragen werden. Es ist beispielsweise auch möglich, die Daten mit zusätzlichen Informationen aus einer Datenbank zu koppeln.

Das Miniaturspektrometer ist ein Spektrometer, welches Abmessungen im Zentimeterbereich, insbesondere im Bereich von weniger als 15 cm und mehr als 1 cm oder darunter aufweist. Beispielsweise ist das Miniaturspektrometer größer gleich 1 $cm^3$ und kleiner gleich 1000 $cm^3$. Alternativ oder ergänzend kann das Miniaturspektrometer auch kleiner gleich 1 $cm^3$ und größer gleich 0,01 $cm^3$ sein. Alternativ oder ergänzend kann das Miniaturspektrometer auch kleiner gleich 100 $cm^3$ und größer gleich 0,01 $cm^3$ sein.

Das Miniaturspektrometer verarbeitet in einer Ausführungsform elektromagnetische Strahlung im visuellen oder nahinfraroten Spektralbereich. Die Wahl des Spektralbereichs, in welchem das Miniaturspektrometer arbeitet, richtet sich nach den zu behandelnden Anwendungsfällen und kann beispielsweise in Abhängigkeit des Anwendungsfalls gewählt werden.

Ein Verfahren zur spektralen Analyse eines Mediums mittels der spektrometrischen Messvorrichtung zeichnet sich dadurch aus, dass das Verfahren die nachfolgenden Schritte aufweist:

- Anordnen des optischen Elements an der Aufnahmevorrichtung,
- Erfassen spektraler Daten mit der Detektionseinheit des Miniaturspektrometers,
- Ermitteln eines Spektrums und/oder einer spektralen Information aus den spektralen Daten zur Analyse des Mediums.

Ein Vorteil ist, dass dieses Verfahren ermöglicht nach dem "Point and Shoot" Prinzip zu arbeiten, indem die spektrometrische Messvorrichtung zur Durchführung der Messung einfach auf das Gefäß aufgesetzt wird, ohne zuvor ein Messzubehör an dem Gefäß zu installieren oder die spektrometrische Messvorrichtung in die Flüssigkeit einzutauchen. Dadurch kann eine zuverlässige, zerstörungsfreie spektrale Analyse des Mediums erfolgen. Weitere Vorteile ergeben sich aus den zuvor beschriebenen Vorteilen.

Gemäß einer Ausführungsform zeichnet sich das Verfahren dadurch aus, dass eine Referenzmessung nachfolgende Schritte umfasst:

- Anordnen des optischen Elements oberhalb eines Füllstands des Mediums,

- Erfassen spektraler Hintergrunddaten mit der Detektionseinheit des Miniaturspektrometers,

- Ermitteln eines Hintergrundspektrums aus den spektralen Hintergrunddaten. Des Weiteren zeichnet sich das Verfahren dadurch aus, dass ein Ermitteln eines korrigierten Spektrums des Mediums zur Analyse des Mediums durch Subtraktion des Hintergrundspektrums von dem Spektrum des Mediums erfolgt. Ein Vorteil ist, dass somit zwischen spektralen Informationen des Materials der Aufnahmevorrichtung und spektralen Informationen Mediums unterschieden werden kann somit kann die Zuverlässigkeit der Messergebnisse erhöht werden kann.

Die Referenzmessung kann beispielsweise vor der eigentlichen Messung, bei der das optischen Elements unterhalb des Füllstands des Mediums angeordnet wird, und/oder nach der eigentlichen Messung, bei der das optischen Elements unterhalb des Füllstands des Mediums angeordnet wird, durchgeführt werden.

Bei der spektralen Analyse des Mediums wird ein Spektrum des Mediums ausgewertet, um daraus eine qualitative oder quantitative Zusammensetzung, d. h. die spektrale Information des Mediums zu ermitteln. Spektrale Informationen eines Mediums, wobei das Medium beispielsweise ein gasförmiges, flüssiges und/oder festes Medium umfassen kann, können im Allgemeinen aus einer vom Medium kommenden elektromagnetischen Strahlung, beispielsweise aus einer von dem Medium emittierten, reflektierten, transmittierten und/ oder gestreuten elektromagnetischen Strahlung, gewonnen werden, indem diese elektromagnetische Strahlung von einem Spektrometer, beispielsweise einem Miniaturspektrometer, aufgenommen und ausgewertet wird. Beispielsweise können spektrale Informationen durch Abgleich eines Interferogramms oder des Spektrums mit in einem Speicher hinterlegten Referenzdaten, beispielsweise Referenzspektren oder Ausschnitte von Referenzspektren, ermittelt werden. Der Speicher kann hierbei in das Miniaturspektrometer integriert sein oder bezüglich des Miniaturspektrometers extern angeordnet sein. Ein Beispiel für letzteres ist eine Cloud. Der Abgleich kann unter Zuhilfenahme eines Computeralgorithmus erfolgen.

Kurze Beschreibung der Zeichnungen

Ausführungsbeispiele der Erfindung sind in den Zeichnungen dargestellt und werden in der nachfolgenden Beschreibung näher erläutert. Gleiche Bezugszeichen in den Figuren bezeichnen gleiche oder gleichwirkende Elemente.

Es zeigen

Fig. 1 zeigt eine Aufsicht auf eine spektrometrische Messvorrichtung gemäß einem Ausführungsbeispiel, wobei die spektrometrische Messvorrichtung an einer Aufnahmevorrichtung angeordnet ist und wobei ein zu untersuchendes Medium in der Aufnahmevorrichtung angeordnet ist,

Fig. 2 zeigt eine Seitenansicht einer spektrometrischen Messvorrichtung gemäß einem Ausführungsbeispiel, wobei die spektrometrische Messvorrichtung an einem Trinkglas angeordnet ist,

Fig. 3 zeigt eine Seitenansicht einer spektrometrischen Messvorrichtung gemäß einem Ausführungsbeispiel, bei die spektrometrische Messvorrichtung an einer Flasche angeordnet ist,

Fig. 4 zeigt ein erstes Ausführungsbeispiel eines optischen Elements im Querschnitt, wobei das optische Element M-förmig ausgebildet ist,

Fig. 5 zeigt ein zweites Ausführungsbeispiel eines optischen Elements, wobei das optische Element ein Verbindungselement umfasst,

Fig. 6 zeigt ein drittes Ausführungsbeispiel eines optischen Elements, wobei das optische Element ein Verbindungselement umfasst,

Fig. 7 zeigt ein Flussdiagramm eines Verfahrens zur spektralen Analyse eines Mediums mittels einer spektrometrischen Messvorrichtung und

Fig. 8 zeigt ein Flussdiagramm eines Verfahrens zur spektralen Analyse eines Mediums, welches eine Referenzmessung umfasst.

Ausführungsbeispiele der Erfindung

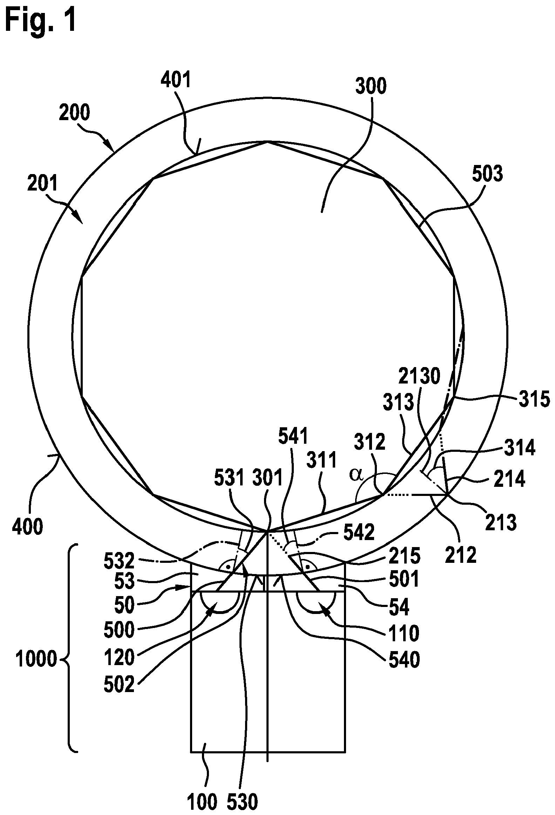

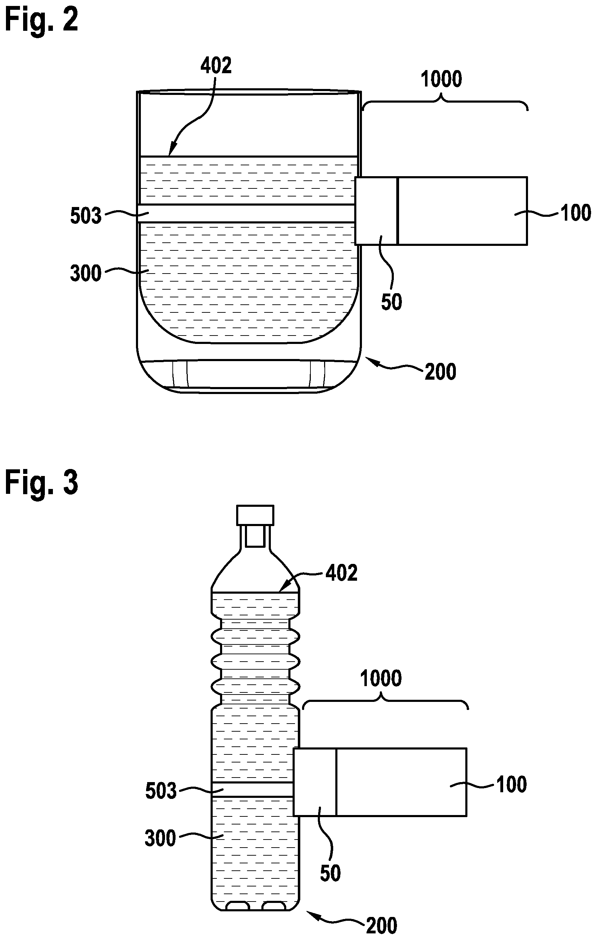

In Fig. 1 ist eine Aufsicht auf eine spektrometrische Messvorrichtung 1000 skizziert, wobei die spektrometrische Messvorrichtung 1000 an einer Aufnahmevorrichtung 200 angeordnet ist. Ein Strahlenverlauf ist in Fig. 1 beispielhaft anhand einzelner Lichtstrahlen skizziert. Die Aufnahmevorrichtung 200 weist in diesem Ausführungsbeispiel einen kreisringförmigen Querschnitt auf. Die Aufnahmevorrichtung 200 ist dazu eingerichtet, ein Medium aufzunehmen. In Fig. 1 umfasst die Aufnahmevorrichtung 200 eine kreisringförmige Wand 201, welche das Medium 300 umschließt. Unter anderem sind Glasbehälter, Trinkgläser und Kunststoffflaschen zur Verwendung als Aufnahmevorrichtung 200 geeignet. Der Brechungsindex der Aufnahmevorrichtung 200 kann je nach verwendetem Material beispielsweise 1,5 oder 1,6 betragen oder in einem Bereich zwischen 1,5 und 1,6 liegen. Die Aufnahmevorrichtung 200 kann als Material beispielsweise Kalk-Natron-Glas oder Polyethylenterephthalat (PET) umfassen. Die Aufnahmevorrichtung 200 kann beispielsweise mit einem Deckel verschlossen sein (wie beispielsweise in Fig. 3 gezeigt), oder unverschlossen (wie beispielsweise in Fig. 2 gezeigt) sein, d.h. eine Öffnung hin zur Umgebung aufweisen.

Die spektrometrische Messvorrichtung 1000 in Fig. 1 ist auf einer von dem Medium 300 abgewandten, der Umgebung zugewandten Seite 400 der ringförmigen Wand 201 angeordnet. Die spektrometrische Messvorrichtung 1000 steht somit nicht in direktem mechanischem Kontakt mit dem Medium 300. Das Medium 300 und die spektrometrische Messvorrichtung 1000 werden durch die Wand 201 voneinander separiert. Die spektrometrische Messvorrichtung 1000 ist zur Erfassung spektrometrischer Daten des Mediums 300 eingerichtet. Die spektrometrische Messvorrichtung 1000 umfasst ein Miniaturspektrometer 100 und ein optisches Element 50. Das optische Element 50 ist im Strahlengang zwischen dem Miniaturspektrometer 100 und der Aufnahmevorrichtung 200 angeordnet. Das optische Element 50 kann lösbar oder nicht lösbar mit dem Miniaturspektrometer 100 verbunden sein. Im Falle einer lösbaren Verbindung kann das optische Element 50 beispielsweise auf das Miniaturspektrometer 100 aufgesteckt, geklemmt oder angedrückt werden. Im Fall einer nicht lösbaren Verbindung werden das Miniaturspektrometer 100 und das optische Element 50 bei der Herstellung fest, d. h. nicht zerstörungsfrei voneinander trennbar, miteinander verbunden. Das Miniaturspektrometer 100 umfasst eine Beleuchtungseinheit 120 und eine Detektionseinheit 110. Die Beleuchtungseinheit 120 ist dazu eingerichtet, elektromagnetische Strahlung 500 zur Beleuchtung des Mediums 300 bereitzustellen. Die Detektionseinheit 110 ist dazu eingerichtet, vom Medium 300 kommende elektromagnetische Strahlung 501 zu detektieren.

Die Beleuchtungseinheit 120 kann mindestens eine Lichtquelle umfassen, wobei beispielsweise Glühlampen, thermische Emitter, Laser, eine oder mehrere Leuchtdioden (LED), LEDs mit Phosphorbeschichtung und/oder Plasmastrahlungsquellen, etc. als Lichtquellen verwendet werden können.

Die Detektionseinheit 110 kann ein Detektorelement oder ein Detektorarray, welches mehrere Detektorelemente umfasst, umfassen. Als Detektorelement kann ein Strahlungssensor beispielsweise basierend auf Silizium (Si), Germanium (Ge), Germanium auf Silizium, Indium-Gallium-Arsenid (InGaAs), Bleiselenit (PbSe) verwendet werden. Als Strahlungssensoren eignen sich beispielsweise auch Fotodioden oder Bolometer. Strahlungssensoren können in Abhängigkeit einer Eigenschaft der auf den Strahlungssensor auftreffenden elektromagnetischen Strahlung ein elektrisches Signal ausgeben, welches ein Maß für die Strahlungseigenschaft ist. Strahlungssensoren können beispielsweise eine Intensität oder eine Energieflussdichte der detektierten elektromagnetischen Strahlung messen.

Die Beleuchtungseinheit 120 und/oder die Detektionseinheit 110 können mindestens ein spektrales Element umfassen. Beispielsweise kann ein spektrales Element im Strahlengang zwischen der Lichtquelle und dem optischen Element 50 angeordnet sein. Alternativ oder ergänzend kann ein spektrales Element im Strahlengang zwischen dem optischen Element 50 und dem Detektorelement bzw. dem Detektorarray angeordnet sein. Das spektrale Element kann beispielsweise ein Fabry-Pérot Interferometer, ein Gitterspektrometer, ein Transmissionsfilter ein statisches oder bewegliches Fourier-Transformationsspektrometer und/oder einen anderen wellenlängenselektiven Filter umfassen.

Alternativ oder ergänzend können die Beleuchtungseinheit 120 und/oder die Detektionseinheit 110 auch eine oder mehrere Aperturblenden, Linsen, Mikrolinsen oder andere optische Elemente umfassen, welche im Strahlengang zwischen der Lichtquelle und dem optischen Element 50 und/oder im Strahlengang zwischen dem optischen Element 50 und dem Detektorelement bzw. dem Detektorarray angeordnet sein können.

Im Folgenden wird unter einem Miniaturspektrometer 100 ein eigenständiges Gerät verstanden, welches Abmessungen im Zentimeterbereich, insbesondere im Bereich von weniger als 15 cm und mehr als 1 cm oder darunter aufweist. Beispielsweise ist das Miniaturspektrometer größer gleich 1 cm$^3$ und kleiner gleich 1000 cm$^3$. Alternativ oder ergänzend kann das Miniaturspektrometer auch kleiner gleich 1 cm$^3$ und größer gleich 0,01 cm$^3$ sein. Alternativ oder ergänzend kann das Miniaturspektrometer auch kleiner gleich 100 cm$^3$ und größer gleich 0,01 cm$^3$ sein. Das Miniaturspektrometer 100 kann als eigenständiges Gerät, beispielsweise ein Hand-held Gerät, ausgebildet sein. Alternativ oder ergänzend kann das Miniaturspektrometer 100 ein Smartphone umfassen, welches eine Beleuchtungseinheit 120 zur Beleuchtung des Mediums 300 und eine Detektionseinheit 110 zur Detektion der vom Medium 300 kommenden elektromagnetischen Strahlung 501 umfasst. Das Miniaturspektrometer 100 kann eine in Fig. 1 nicht dargestellte periphere Elektronik und Kommunikationsschnittstellen (z. B. Bluetooth, Wifi, USB, etc.) umfassen.

Das optische Element 50 umfasst ein erstes lichtführendes Element 53 und ein zweites lichtführendes Element 54. Das erste lichtführende Element 53 ist dazu eingerichtet, die von der Beleuchtungseinheit kommende elektromagnetische Strahlung 500 zu der Aufnahmevorrichtung 200, in welcher das zu untersuchende Medium 300 angeordnet ist, zu führen. Das erste lichtführende Element 53 weist eine erste Endfläche 530, wobei die erste Endfläche 530 infolge einer Dimensionierung des ersten lichtführenden Elements einen ersten Winkel 531 vorgibt, den ein von der Beleuchtungseinheit 120 kommender und von dem ersten lichtführenden Element führbarer Strahl 500 beim Austritt durch die erste Endfläche 530 aufweist, wobei der erste Winkel 531 dergestalt ist, dass ein Lichtpfad 503 des Strahls, im Medium ein Polygon, insbesondere regelmäßiges Polygon, beschreibt, wie dies in Fig. 1 dargestellt ist. Der erste Winkel 531 ist hierbei relativ zu einer Oberflächennormalen 532 in dem Punkt, in dem der Strahl durch die erste Endfläche 530 aus dem ersten lichtführenden Element 53 austritt, angegeben. Das zweite lichtführende Element 54 ist dazu eingerichtet, einen Strahlungsanteil 501, welcher spektrale Informationen über das Medium 300 umfasst, von der Aufnahmevorrichtung 200 zu der Detektionseinheit 110 zu führen. Das zweite lichtführende Element 54 weist eine zweite Endfläche 540 auf, wobei die Aufnahmevorrichtung 200 an der zweiten Endfläche 540 des zweiten lichtführenden Elements 54 angeordnet oder anordenbar ist, wobei die zweite Endfläche 540 infolge einer Dimensionierung des zweiten lichtführenden Elements 54 einen zweiten Winkel 541 vorgibt, den ein von dem zweiten lichtführenden Element 54 führbarer Strahl 501 beim Eintritt in das zweite lichtführende Element 54 durch die zweite Endfläche 540 aufweist, wobei der zweite Winkel 541 dergestalt ist, dass ein von dem polygonalen Lichtpfad 503 kommender Strahl 215 von dem zweiten lichtführenden Element 54 aufnehmbar und der Detektionseinheit 110 zuführbar ist. Der zweite Winkel 541 ist hierbei relativ zu einer Oberflächennormalen 542 in dem Punkt, in dem der vom polygonalen Lichtpfad kommende und von der Wand 201 transmittierte Strahl 215 auf die zweite Endfläche 540 auftrifft, angegeben.

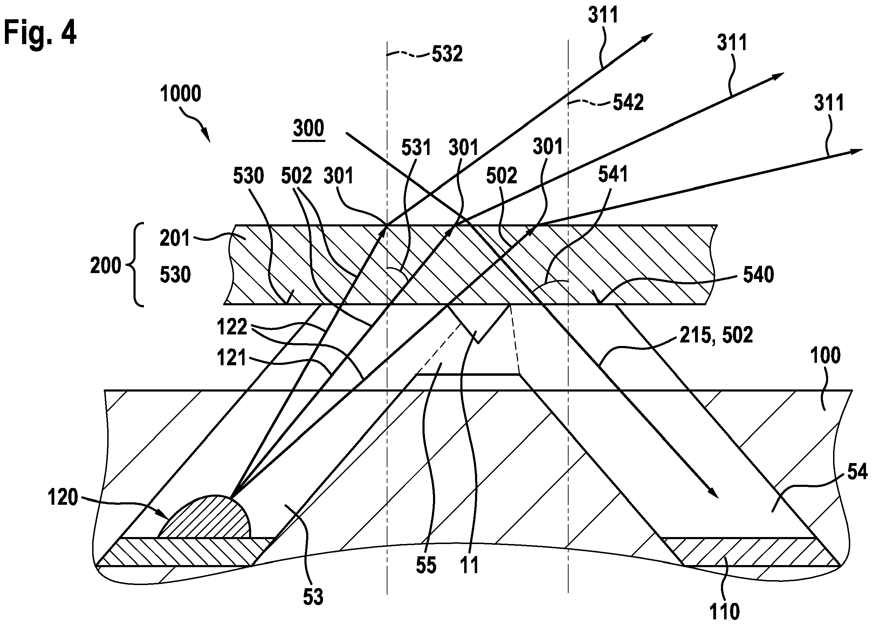

Ein detaillierter Aufbau des optischen Elements 50, sowie des ersten lichtführenden Elements 53 und des zweiten lichtführenden Elements 54, ist in Fig. 1 nicht gezeigt. Es handelt sich hierbei lediglich um eine Skizze. Das optische Element 50 in Fig. 1 kann beispielsweise gemäß den in den Figuren 4, 5 und 6 dargestellten optischen Elementen 10 ausgebildet sein. Ausführungsbeispiele mit einem detaillierten Aufbau des optischen Elements 50 sind nachstehend in der Beschreibung zu den Figuren 4, 5 und 6 besch rieben.

In Fig. 1 sind das erste lichtführende Element 53 und das zweite lichtführende Element 54 aus einem Material ausgebildet, welches einen Brechungsindex von 1,5 oder 1,6 oder einen Brechungsindex im Intervall zwischen 1,5 und 1,6 aufweist. Dadurch, dass die lichtführenden Elemente 53, 54 somit einen ähnlichen Brechungsindex wie die Aufnahmevorrichtungen 200 in Fig. 1 aufweisen, kann ein aus dem ersten lichtführenden Element 53 austretender Lichtstrahl mit vernachlässigbarem Reflexionsverlust in die Wand 201 der Aufnahmevorrichtung 200 eingekoppelt werden. Des Weiteren kann somit ein aus der Aufnahmevorrichtung 200 ausgekoppelter Lichtstrahl mit vernachlässigbarem Reflexionsverlust in das zweite lichtführende Element 54 eintreten.

Der Strahlenverlauf im Medium 300 ist in Fig. 1 beispielhaft anhand einzelner Lichtstrahlen skizziert. Der Lichtstrahl 500 wird von der Beleuchtungseinheit 120 emittiert und tritt in das erste lichtführende Element 53 ein. Das erste lichtführende Element 53 führt den Lichtstrahl 500 an die erste Endfläche 530. Dort tritt der Lichtstrahl 500 aus dem ersten lichtführenden Element 53 aus und in die Wand 201 der Aufnahmevorrichtung 200 ein 502. Aufgrund der ähnlichen Brechungsindizes tritt der Lichtstrahl 502 mit vernachlässigbarem Reflexionsverlust nahezu unabgelenkt in die Gefäßwand 201 ein. Der Lichtstrahl 502 wird von der Wand 201 transmittiert und wird an einem Eintrittspunkt 301 an der dem Medium 300 zugewandten Seite 401 der Wand 201 zumindest teilweise in das Medium 300 transmittiert, wobei er eine Ablenkung nach dem Snellius'schen Brechungsgesetz erfährt. Der abgelenkte Lichtstrahl 311 propagiert durch das Medium 300, bis er in einem ersten Auftreffpunkt 312 auf der dem Medium 300 zugewandten Seite 401 der Wand 201 teilweise reflektiert 313 und teilweise von der Wand 201 transmittiert 212 wird. Der reflektierte Anteil 313 propagiert durch das Medium 300, bis er erneut auf die Innenseite 401 der Wand 201 in einem zweiten Auftreffpunkt 315 teilweise reflektiert und teilweise von der Wand 201 transmittiert wird. Der reflektierte Anteil propagiert wiederum durch das Medium bis zum nächsten Auftreffpunkt, wobei wiederum ein Anteil im Auftreffpunkt reflektiert wird und somit entlang des polygonalen Lichtpfads 503 geführt wird. Die Auftreffpunkte 312, 315 des jeweils reflektierten Anteils entsprechen hierbei den Ecken des Polygons. Beträgt der Winkel $\alpha$ zwischen dem abgelenkten Lichtstrahl 311 und dem reflektierten Anteil 313

$$\alpha = \frac{n-1}{2} * 180°,$$

wobei *n* für die Anzahl Auftreffpunkte 312, 315 steht, beschreibt der Lichtpfad 503 im Medium 300 ein regelmäßiges Polygon, d. h. ein regelmäßiges *n*-Eck, und der Lichtstrahl trifft nach einem Umlauf wieder im Eintrittspunkt 301 auf. Im Eintrittspunkt 301 wird der Lichtstrahl teilweise reflektiert 311 und teilweise in die Wand 201 transmittiert 215. Der reflektierte Anteil 311 kann den polygonalen Lichtpfad 503 erneut oder auch mehrfach durchlaufen und im Eintrittspunkt 301 erst nach mehrmaligem Umlauf von der Wand 201 transmittiert werden. Beim Eintritt in die Wand 201 erfährt der transmittierte Lichtstrahl 215 eine Ablenkung nach dem Snellius'schen Brechungsgesetz. Der Lichtstrahl 215 wird von der Wand 201 transmittiert und tritt nach Passieren der Wand 201 in das zweite lichtführende Element 54 ein, da der zweite Winkel 541 dergestalt ist, dass der von dem polygonalen Lichtpfad 503 kommende Anteil 501 von dem zweiten lichtführenden Element 54 aufnehmbar und der Detektionseinheit 110 zuführbar ist. Aufgrund der ähnlichen Brechungsindizes der Wand 201 und des zweiten lichtführenden Elements 54 tritt der Lichtstrahl 501 mit vernachlässigbarem Reflexionsverlust nahezu unabgelenkt in das zweite lichtführende Element 54 ein. Das zweite lichtführende Element 54 führt den Lichtstrahl 501 aufgrund des durch die Dimensionierung des zweiten lichtführenden Elements 54 vorgegebenen zweiten Winkels 541 zur Detektionseinheit 110, welche mit dem Miniaturspektrometer 100 auf das optische Element 50 aufgesetzt ist. In der Detektionseinheit 110 können die spektralen Daten, die der Lichtstrahl im Medium 300 gesammelt hat, erfasst werden. Aus den spektralen Daten kann ein Spektrum und/oder eine spektrale Information zur Analyse des Mediums 300 ermittelt werden.

Der transmittierte Anteil 212 kann in Abhängigkeit eines Auftreffwinkels an der Grenzfläche zwischen Wand und Umgebung, das heißt beispielsweise Luft, aufgrund des Brechungsindexunterschieds totalreflektiert werden. Eine Eigenschaft der Totalreflexion ist, dass keine Reflexionsverluste auftreten. Der totalreflektierte Lichtstrahl 214 propagiert nun wiederum wie zuvor beschrieben durch das Medium und kann an der Grenzfläche zum Medium 300 zumindest teilweise vom Medium 300 transmittiert werden wie zuvor beschrieben durch das Medium 300 propagieren. Es ergibt sich folglich neben dem polygonalen Lichtpfad 503 ein weiterer Lichtpfad, der von Lichtstrahlen durchlaufen wird, welche an der Grenzfläche zwischen Wand 201 und Umgebung totalreflektiert werden. Lichtstrahlen können zwischen den Lichtpfaden an der Grenzfläche zwischen dem Medium 300 und der Wand 201 wechseln. Insbesondere kann aufgrund der Totalreflexion nahezu kein Licht die Aufnahmevorrichtung 200 durch die Wand 201 verlassen, außer an der Stelle, an der das optische Element 50 an die Wand 201 aufgesetzt ist, da in diesem Bereich durch die ähnlichen Brechungsindizes des optischen Elements 50 und der Aufnahmevorrichtung 200 der Brechungsindexsprung minimiert wird. Mittels des optischen Elements 50 kann somit von dem Medium kommende elektromagnetische Strahlung 501 aus der Aufnahmevorrichtung 200 ausgekoppelt werden und zur spektralen Analyse hin zur Detektionseinheit 110 geführt werden.

Im Folgenden wird angenommen, dass der Brechungsindex des Materials der Aufnahmevorrichtung 200 im Bereich von 1,5 bis 1,6 liegt, wobei 1,5 und 1,6 eingeschlossen sind. Der Reflexionswinkel 314 wird relativ zur Oberflächennormalen 2130 im Auftreffpunkt 213 an der Grenzfläche 400 zur Umgebung gemessen und liegt zwischen 0° und 90°. Damit eine Totalreflektion in der Wand 201 der Aufnahmevorrichtung 200 an der Grenzfläche 400 zur Umgebung, d.h. der Außenseite der Aufnahmevorrichtung 200, auftritt, sollte der Reflexionswinkel 314 am Auftreffpunkt 213 größer gleich 42° sein. Der Winkel von 42° stellt hierbei den sogenannten Grenzwinkel der Totalreflektion, d.h. Strahlen, die mit einem Winkel, der größer als der Grenzwinkel ist, im Auftreffpunkt 213 auftreffen, werden nahezu vollständig zurück in die Wand 201 reflektiert. Dieser Wert von 42° gibt den Grenzwinkel für einen Brechungsindex des Materials der Aufnahmevorrichtung 200 von 1,5 und einem Brechungsindex der Umgebung von 1, was beispielsweise für Luft der Fall ist, an. Der genaue Grenzwinkel beträgt 41,8°. Beträgt der Brechungsindexunterschied der Materialien des optischen Elements bzw. der lichtführenden Elemente und der Aufnahmevorrichtung 0,1 oder weniger als 0,1 so sollte der Winkel die Brechung eines Lichtstrahls an der Grenzfläche zwischen optischem Element und Aufnahmevorrichtung berücksichtigen und folglich einen um diese Brechung korrigierten Wert aufweisen. Der Grenzwinkel stimmt mit dem unteren Winkel des Intervalls der ersten Winkel 531 überein. In diesem Ausführungsbeispiel wird die Dimensionierung des ersten lichtführenden Elements derart gewählt werden, dass die vom ersten lichtführenden Element 53 geführten Strahlen mit einem Winkel zwischen 42° und 90°, die Intervallgrenzen eingeschlossen, auf die Wand 201 der Aufnahmevorrichtung 200 auftreffen. Analog wird hier die Dimensionierung des zweiten lichtführenden Elements 54 derart gewählt, dass nur die vom polygonalen Lichtpfad 503 kommenden und von der Wand im Eintrittspunkt 301 teilweise transmittierten Strahlen mit einem Winkel zwischen 42° und 90°, die Intervallgrenzen eingeschlossen, durch die zweite Endfläche 540 in das zweite lichtführende Element 54 eintreten, und von dem zweiten lichtführenden Element 54 zur Detektionseinheit 110 geführt werden.

Ausgehend von einem Winkel von 41,8° zur Oberflächennormalen 2130 im Punkt 213 ergibt sich nach dem Snellius'schen Brechungsgesetz ein Winkel von $\alpha = 102°$ im Punkt 312 zwischen dem abgelenkten Strahl 311 und dem im ersten Auftreffpunkt 312 teilweise reflektierten Anteil 313 auf der Seite des Mediums 300 unter der Annahme eines Brechungsindex des Mediums 300 von 1,33, wie dies beispielsweise für Wasser der Fall ist, und 1,55 für die Gefäßwand. Wird der Winkel von $\alpha = 102°$ im Punkt 312 zwischen dem abgelenkten Strahl 311 und dem im ersten Auftreffpunkt 312 teilweise reflektierten Anteil 313 auf $\alpha = 108°$ vergrößert, so ergibt sich ein regelmäßiges 5-Eck für den Lichtpfad 503 des im Medium 300 umlaufenden Lichts. Nun wird wiederum das Snellius'schen Gesetz angewendet, um den Einstrahlwinkel (=Reflexionswinkel 314) des im ersten Auftreffpunkt 312 transmittierten Anteils auf den Auftreffpunkt 213 an der Grenzfläche 400 zur Umgebung, zu korrigieren. Für die genannten Brechungsindizes (1,55 und 1,33) erhält man damit einen Einstrahlwinkel von 43,94°, d. h. gerundet 44°.

Zusammenfassend wurde zunächst der Grenzwinkel für Totalreflexion im Auftreffpunkt 213 an der Grenzfläche 400 zur Umgebung relativ zur Oberflächennormalen 2130 berechnet. Strahlen, welche einen größeren Reflexionswinkel 314 als den Grenzwinkel aufweisen sind dabei auch möglich, da nach wie vor Totalreflexion der vom Medium 300 teilweise in die Wand 201 transmittierten Strahlen 212 an der Außenseite 400 auftritt und die Strahlen somit nicht aus der Aufnahmevorrichtung 200 entweichen sondern zurück in Richtung Medium 300 geführt werden. Die Berechnung des Grenzwinkels erfolgt unter Berücksichtigung des Brechungsindexes der Umgebung und des Brechungsindexes der Wand 201 der Aufnahmevorrichtung 200. Hierauf basierend und mit der Bedingung, dass die Summe der Winkel des polygonalen Lichtpfades 503 gleich der eines n-Ecks (n=Anzahl Ecken) sein soll, wurde eine untere Grenze für den ersten Winkel 531 berechnet, mit der die von der Beleuchtungseinheit 120 kommenden Strahlung 500 auf die Aufnahmevorrichtung 200 auftreffen kann, um beim Eintritt ins Medium 300 zumindest anteilig auf dem polygonalen Lichtpfad 503 zu verlaufen. In der Regel besitzt die verwendete Lichtquelle der Beleuchtungseinheit 120 eine gewisse Strahldivergenz, so dass nicht alle Lichtstrahlen auf einem n-Eck umlaufen. Solche Strahlen können jedoch, wie vorstehend beschrieben nach mehr als einem Umlauf die Detektionseinheit 110 erreichen.

Fig. 2 zeigt ein Ausführungsbeispiel in einer Seitenansicht, bei dem die spektrometrische Messvorrichtung 1000, umfassend das optische Element 50 und das Miniaturspektrometer 100 an einem Trinkglas angeordnet wird, wobei das Trinkglas als Aufnahmevorrichtung 200 verwendet wird und wobei in dem Trinkglas ein Medium 300, beispielsweise eine Flüssigkeit, angeordnet ist. Das Trinkglas kann beispielsweise aus Kalk-Natron-Glas hergestellt sein. Die Flüssigkeit ist bis zu einem Füllstand 402 der Aufnahmevorrichtung 200 gefüllt. Unterhalb des Füllstands 402 ist die Flüssigkeit in der Aufnahmevorrichtung 200 angeordnet, oberhalb des Füllstands füllt die Atmosphäre der Umgebung, beispielsweise Luft, die Aufnahmevorrichtung 200. Das Trinkglas ist nach oben hin geöffnet, d.h. es weist insbesondere keinen Deckel oder Abdeckung auf. Die spektrometrische Messvorrichtung 1000 kann beispielsweise von einem Benutzer zur Durchführung einer spektralen Analyse des Mediums 300 an das Trinkglas gehalten werden. Das optische Element 50 liegt an den Endflächen 530, 540 an dem Trinkglas an. Das optische Element 50 ist im Strahlengang zwischen dem Miniaturspektrometer 100 und der Wand des Trinkglases angeordnet. In Fig. 2 ist eine Ebene markiert, in der der polygonalen Lichtpfad 503 liegt, welcher beispielsweise in Fig. 1 in einer Aufsicht skizziert ist.

Fig. 3 zeigt ein weiteres Ausführungsbeispiel in einer Seitenansicht, bei dem die spektrometrische Messvorrichtung 1000, umfassend das optische Element 50 das Miniaturspektrometer 100 an einer Flasche, hier eine PET-Flasche, als Aufnahmevorrichtung 200 angeordnet ist. Die Flasche ist mit einem Deckel gegenüber der Umgebung verschlossen. Die PET-Flasche ist bis zu einem Füllstand 402 mit dem zu untersuchenden Medium 300, hier eine Flüssigkeit, gefüllt. Die spektrometrische Messvorrichtung 1000 kann beispielsweise von einem Benutzer an die PET, Flasche gehalten werden. Analog zu Fig. 2 ist auch hier eine Ebene markiert, in der der polygonalen Lichtpfad 503 liegt, welcher beispielsweise in Fig. 1 in einer Aufsicht skizziert ist.

Fig. 4 zeigt einen Querschnitt eines Ausführungsbeispiels des optischen Elements 50, welches mit einem Miniaturspektrometer verbunden ist. Das optische Element 50 ist hier M-förmig ausgebildet. Das erste lichtführende Element 53 stellt hierbei einen ersten Außenschenkel des M dar und das zweite lichtführende Element 54 stellt einen zweiten Außenschenkel des M dar. Die Außenschenkel sind jeweils an einem der Endfläche 530, 540 gegenüberliegenden Ende in das Miniaturspektrometer 100 eingelassen, wobei an dem ersten Endfläche 530 gegenüberliegenden Seite die Beleuchtungseinheit 120 angeordnet ist und an der der zweiten Endfläche 540 gegenüberliegenden Seite die Detektionseinheit 110 angeordnet ist. Die lichtführenden Elemente 53, 54 können beispielsweise einen rechteckigen, quadratischen oder runden Querschnitt aufweisen. Zwischen den Außenschenkeln ist ein Steg 55 angeordnet. Der Steg 55 kann in einem Ausführungsbeispiel aus dem gleichen Material wie die lichtführenden Elemente 53, 54 gefertigt sein. In einer weiteren Ausführungsform kann der Steg 55 aus einem anderen, insbesondere optisch nicht transparenten, Material als die Lichtwellenleiter 53, 54 gefertigt sein, um die beiden Lichtwellenleiter 53 und 54 optisch zu trennen und ein direktes Übersprechen des Anregungslichts auf die Detektionseinheit zu verhindern. Der Steg 55 wird durch die Außenschenkel von dem Miniaturspektrometer 100 beabstandet gehalten. Zwischen der ersten Endfläche 530 und der zweiten Endfläche 540 ist eine Vertiefung 11, hier ein Kerbe, im Steg 55 ausgebildet. Das optische Element 10 kann hierbei zwischen 5 mm und 10 mm breit sein. Insbesondere können die Endflächen 530, 540 jeweils eine Breite bzw. einen Durchmesser von 2 mm bis 5 mm, die Intervallgrenzen inbegriffen, aufweisen. Die lichtführenden Elemente 53, 54, insbesondere inklusive des Stegs 55, sind vorzugsweise aus einem Material ausgebildet, welches eine hohe optische Transparenz in dem Wellenlängenbereich der von der Beleuchtungseinheit 120 emittierten elektromagnetischen Strahlung aufweist. Vorteilhaft ist es des Weiteren, wenn das optische Element 50 aus einem elastischen Material ausgebildet ist. Dies ermöglicht es, dass die Endflächen 530, 540 des optischen Elements 50 auch auf gekrümmten Aufnahmevorrichtungen 200 und/oder Aufnahmevorrichtungen 200, die eine unebene Oberfläche aufweisen, mit der Wand 201 in Kontakt gebracht werden können, um Reflexionsverluste zu vermeiden. Vorteilhaft sind hier optische Polymere (z.B. Silikon), denen durch geeignete Synthese die benötigten Eigenschaften gegeben werden können. Die Kerbe 11 kann die Flexibilität des optischen Elements 50 beim Aufsetzen auf die Aufnahmevorrichtung 200 ebenfalls erhöhen.

In Fig. 4 emittiert eine Lichtquelle der Beleuchtungseinheit 120 einen Lichtkegel mit einem zentralen Strahl 121 und Randstrahlen 122. Die erste Endfläche 530 liegt an der Wand 201 an. Der Winkel, unter dem der zentrale Strahl 121 durch die erste Endfläche 530 austritt und welcher in diesem Ausführungsbeispiel dem Winkel entspricht, mit dem der zentrale Strahl 121 in die Wand 201 eintritt, ist in in der Fig. 4 durch den Winkel unter dem der linke Schenkel 53 der M-Form relativ zur Oberflächennormalen auf die Außenseite 400 der Aufnahmevorrichtung 200 aufgesetzt ist, vorgegeben. Die Dimensionierung des linken Schenkels, welcher hier dem ersten lichtführenden Elements 53 entspricht, gibt somit vor, unter welchen Winkeln der zentrale Strahl 121 und die Randstrahlen 122 auf die Aufnahmevorrichtung 200 auftreffen. Die Dimensionierung des ersten lichtüfhrenden Elements 53 gibt auch vor, in welchem Winkelintervall die ersten Winkel 531 der auf die Aufnahmevorrichtung 200 auftreffenden Strahlen liegen. Das Winkelintervall, in dem die ersten Winkel 531 liegen, ist derart gewählt, dass die Lichtstrahlen 121, 122, welche von dem ersten lichtführenden Element 53 zur Aufnahmevorrichtung 200 geführt werden und von der Wand 201 transmittiert werden 502, beim Eintritt in das Medium 300 einen Winkel relativ zur Oberflächennormalen im jeweiligen Eintrittspunkt 301 aufweisen, der so gewählt ist, das die Lichtstrahlen, welche in den Auftreffpunkten 312, 315 zurück ins Medium 300 reflektiert werden, einen polygonalen, insbesondere regelmäßig polygonalen, Lichtpfad 503 beschreiben und nach mindestens einer Umrundung des Mediums 300 entlang des im Medium 300 verlaufenden polygonalen Lichtpfads 503 wieder im jeweiligen Eintrittspunkt 301 auf die Innenseite 401 der Wand 401 auftreffen. Im vorliegenden Fall sind die Brechungsindizes der Wand 201 und des ersten lichtführenden Elements in etwa gleich, das heißt sie weichen um weniger als 0,1 voneinander ab, daher wird der zentrale Strahl 121 beim Eintritt in die Wand 201 näherungsweise nicht gebrochen, sodass der Winkel, mit dem der zentrale Strahl in der Wand 201 verläuft mit dem ersten Winkel 531 übereinstimmt. Würden die Brechungsindizes des optischen Elements 50 und der Wand 201 stärker voneinander abweichen, so sollte die Dimensionierung des ersten lichtführenden Elements 53 derart gewählt werden, dass die Brechung des Strahls beim Eintritt in die Wand 201 bei der Dimensionierung der ersten Endfläche 530 zur Vorgabe des ersten Winkels 531 berücksichtigt wird. Der erste Winkel 531 des zentralen Strahls 121 und die ersten Winkel 531 der Randstrahlen 122 sollten mit einem Winkel größer oder gleich dem Grenzwinkel der Totalreflexion (für das vorstehend beschriebene Zahlenbeispiel also größer oder gleich 42°) in die Wand 201 eintreten. Die von der Wand transmittierten Strahlen 311 besitzen dann in diesem Ausführungsbeispiel im Medium 300 einen Winkel zur Oberflächennormalen 532 von größer als 51° und werden beim erneuten Eindringen in die Gefäßwand 201, beispielsweise durch teilweise Transmission 212 im ersten Auftreffpunkt 312 in Fig. 1, wie vorstehend beschrieben an der Grenzfläche 400 zur Umgebung totalreflektiert. Der erste Winkel 531 wird durch die Dimensionierung der ersten Endfläche 531 derart eingestellt, dass der Lichtpfad 503 im Medium 300 ein Polygon, insbesondere regelmäßiges Polygon, beschreibt (siehe vorstehende Gleichung zur Berechnung von $\alpha$). Das optische Element 50 kann dabei als aufsteckbares Zubehör für das Miniaturspektrometer 100 ausgebildet sein oder in das Miniaturspektrometer 100 integriert sein.

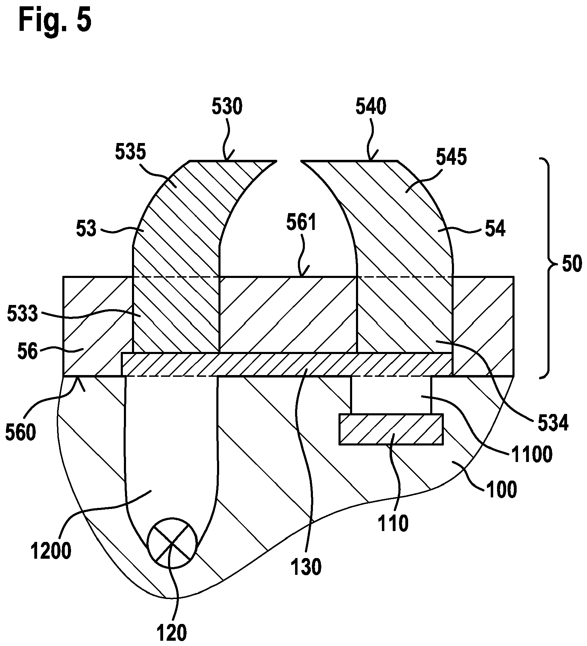

Fig. 5 zeigt einen Querschnitt eines Ausführungsbeispiels des optischen Elements 50, welches mit einem Miniaturspektrometer 100 verbunden ist. Das optische Element 50 umfasst ein Verbindungselement 56, hier ein starres Gehäuse, wobei das erste lichtführende Element 53 und das zweite lichtführende Element 54 jeweils in oder an dem Verbindungselement 56 befestigt sind. Das Verbindungselement 56 ist vorzugsweise in dem verwendeten Wellenlängenbereich intransparent. Hier umfassen die lichtführenden Elemente 53, 54 jeweils einen Lichtwellenleiter 533, 534. Die Lichtwellenleiter 533, 534 sind im Verbindungselement 56 angeordnet und verbinden die Seite 560 des Verbindungselements 56, an der das Miniaturspektrometer angeordnet oder anordenbar ist, mit der dieser Seite gegenüberliegenden Seite 561 des Verbindungselements 56. Auf letzterer 561 ist jeweils ein Abschnitt des lichtführenden Elements 53, 54 angeordnet, der die jeweilige Endfläche 530, 540 umfasst und welcher mit der jeweiligen Endfläche 530, 540 zur Durchführung einer Messung zur spektralen Analyse des Mediums 300 auf die Aufnahmevorrichtung 200 aufgesetzt werden kann. Das erste lichtführende Element 53 und das zweite lichtführende Element sind in dem in Fig. 5 gezeigten Ausführungsbeispiel über das Verbindungselement 56 miteinander verbunden. Ein Beleuchtungspfad 1200 von der Beleuchtungseinheit 120 zum optischen Element 50 und ein Detektionspfad 1100 vom optischen Element 50 zur Detektionseinheit 110 sind hier mit einem Deckglas 130 von dem optischen Element 50 abgetrennt. Das Deckglas kann aus Glas oder aus einem Kunststoff bestehen, dessen Brechungsindex ähnlich zu dem Brechungsindex des Lichtleiters ist, um Reflexionen an Grenzflächen zu reduzieren. Das Verbindungselement 56 weist auf der Seite 560, an der das Miniaturspektrometer 100 aufgesetzt oder aufsetzbar ist, eine Vertiefung auf, welche zur Aufnahme des Deckglases 130 eingerichtet ist. Die von der Beleuchtungseinheit 120 kommende elektromagnetische Strahlung kann somit durch das Deckglas 130 in den Abschnitt des ersten lichtführenden Elements 530, der als Lichtwellenleiter 533 ausgebildet ist, eintreten und von diesem auf die gegenüberliegende Seite 561 des Verbindungselements 56 geführt werden. Auf dieser gegenüberliegenden Seite 545 stehen das erste und das zweite lichtführende Element 53, 54 über das Verbindungselement 56 hinaus. Dieser jeweils überstehende Abschnitt 535, 545 kann beispielsweise aus einem elastischen Material ausgebildet sein. Der jeweils überstehende Abschnitt 535, 545 kann insbesondere aus einem von dem Material der Lichtwellenleiters 533, 534 abweichenden Material ausgebildet sein. Die von dem polygonalen Lichtpfad kommende elektromagnetische Strahlung 215 kann durch die zweite Endfläche 540 in das zweite lichtführende Element 54 eintreten, und mittels des Lichtwellenleiters 534 durch das Verbindungselement hin zum Deckglas 130 geführt werden. Durch das Deckglas 130 kann die Strahlung in den Detektionspfad 1100 des Miniaturspektrometers eindringen und somit zur Detektionseinheit 110 gelangen. Durch die Verwendung der Lichtwellenleiter 535, 545 können die Beleuchtungseinheit 120 und die Detektionseinheit 110 weitgehend unbeschränkt bezüglich Position und Winkel, relativ zum optischen Element 50 angeordnet werden. Somit können eine Vielzahl baulich voneinander abweichender Miniaturspektrometer 100 an das optische Element 50 angeschlossen und somit zusammen mit dem optischen Element 50 als spektrometrische Messvorrichtung 1000 verwendet werden. Die seitlichen Flächen von den lichtführenden Flächen 53 und 54 können verspiegelt sein, um beide Pfade optisch zu trennen. Alternativ oder ergänzend können die seitlichen Flächen auch strahlungsabsorbierend ausgebildet sein, um beide Pfade optisch zu trennen..

Alternativ oder ergänzend kann das Verbindungselement 56 ein Steckelement, wie beispielsweise eine Nut- oder Federstruktur, aufweisen, wobei das Steckelement als Gegenstück zu einer Aufnahmestruktur, beispielsweise eine Feder- oder Nutstruktur, welche von dem Miniaturspektrometer 100 bereitgestellt wird, ausgebildet sein kann. Somit kann das optische Element 50 über das Steckelement an dem Miniaturspektrometer 100, zumindest temporär, fixiert werden.

Das erste lichtführende Element 53 und das zweite lichtführende Element 54 können spiegelsymmetrisch bezüglich der Wand 201 ausgebildet sein, wie dies beispielsweise in Fig. 4, Fig. 5 und Fig. 6 gezeigt ist. Alternativ oder ergänzend können die lichtführenden Elemente auch von der Spiegelsymmetrie abweichend relativ zueinander ausgebildet sein. Beispielsweise kann nur eines der lichtführenden Elemente 53, 54 abschnittsweise als Lichtwellenleiter 535, 545 ausgebildet sein.

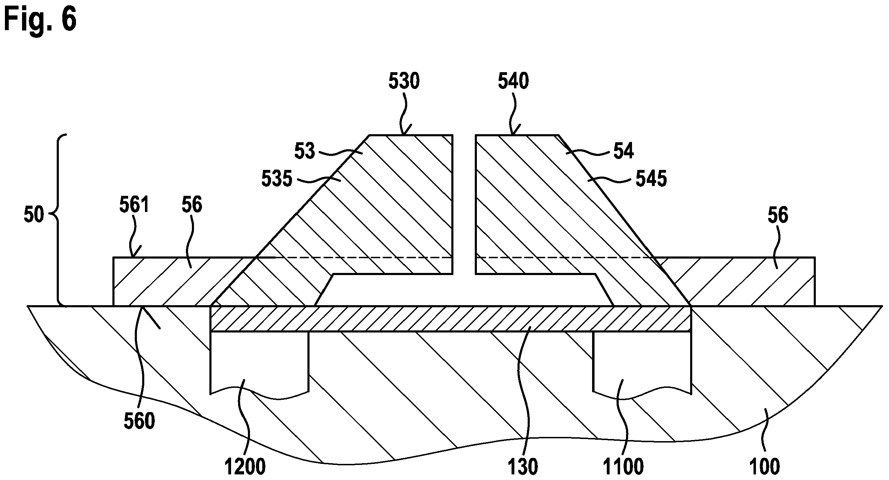

Fig. 6 zeigt einen Querschnitt eines Ausführungsbeispiels des optischen Elements 50, welches mit einem Miniaturspektrometer 100 verbunden ist. Das optische Element 50 umfasst das Verbindungselement 56, hier ein starres Gehäuse, wobei das erste lichtführende Element 53 und das zweite lichtführende Element 54 jeweils analog zu Fig. 5 einen über die vom Miniaturspektrometer 100 abgewandte Seite 561 überstehenden Abschnitt 535, 545 und einen Abschnitt der diese Seite 561 mit der Seite 560 an der das Miniaturspektrometer 100 angeordnet ist oder anordenbar ist verbindet, welcher beispielsweise als Lichtwellenleiter 535, 545 oder aus dem gleichen Material wie der überstehende Abschnitt 533, 534 ausgebildet sein kann. Der Detektionspfad 1100 und der Beleuchtungspfad sind analog zu Fig. 5 mit einem Deckglas abgedeckt, wobei das Deckglas in Fig. 6 jedoch hier mit dem Gehäuse des Miniaturspektrometers 100 abschließt, das heißt nicht übersteht. Das optische Element 50 kann beispielsweise fest mit dem Miniaturspektrometer 100 verbunden, beispielsweise verklebt, sein oder an das Miniaturspektrometer angepresst oder gehalten werden.

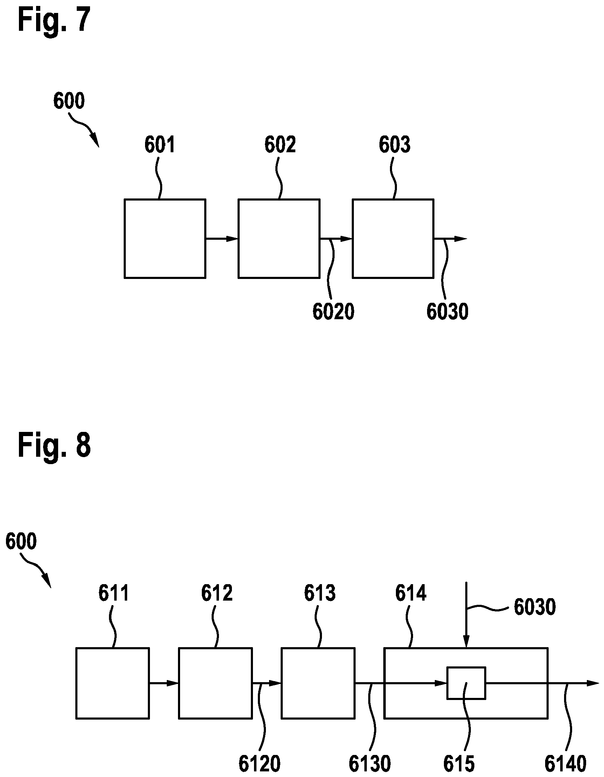

Fig. 7 zeigt ein Flussdiagramm eines Verfahrens 600 zur spektralen Analyse des Mediums 300 mittels der spektrometrischen Messvorrichtung 1000, wobei die spektrometrische Messvorrichtung das optische Element 50 und das Miniaturspektrometer 100 umfasst. Das Miniaturspektrometer 100 ist zur Erfassung der spektrometrischen Daten des Mediums eingerichtet ist. Das Miniaturspektrometer 100 umfasst die Beleuchtungseinheit 120, welche eine optische Kopplung zu dem ersten lichtführenden Element 53 aufweist und dazu eingerichtet ist, elektromagnetische Strahlung zur Beleuchtung des Mediums 300 bereitzustellen, und

die Detektionseinheit 110, welche eine optische Kopplung zu dem zweiten lichtführenden Element 54 aufweist und dazu eingerichtet ist, vom Medium kommende elektromagnetische Strahlung zu detektieren. Das Verfahren 600 umfasst die nachfolgenden Schritte:

- Anordnen 601 des optischen Elements 50 an der Aufnahmevorrichtung 200
- Erfassen 602 spektraler Daten 6020 mit der Detektionseinheit 110 des Miniaturspektrometers 100

- Ermitteln 603 eines Spektrums 6030 und/oder einer spektralen Information aus den spektralen Daten 6020 zur Analyse des Mediums 300.

Das Anordnen 601 des optischen Elements 50 kann beispielsweise durch einen Benutzer der spektrometrischen Messvorrichtung 1000 erfolgen.

Fig. 8 zeigt ein Flussdiagramm des Verfahrens 600 zur spektralen Analyse des Mediums 600, welches eine Referenzmessung 610 umfasst. Die Referenzmessung 610 umfasst dabei die nachfolgenden Schritte:

- Anordnen 611 des optischen Elements 50 an der Aufnahmevorrichtung 200 oberhalb des Füllstands 402 des Mediums 300 in der Aufnahmevorrichtung 200
- Erfassen 612 spektraler Hintergrunddaten 6120 mit der Detektionseinheit 110 des Miniaturspektrometers 100
- Ermitteln 613 eines Hintergrundspektrums 6130 aus den spektralen Hintergrunddaten 6120
- Ermitteln 614 eines korrigierten Spektrums 6140 des Mediums 300 zur Analyse des Mediums durch Subtraktion 615 des Hintergrundspektrums 6130 von dem Spektrum 6120 des Mediums 300.

Aus dem korrigierten Spektrum 6140 können dann beispielsweise spektrale Informationen des Mediums 300 durch Vergleich des Spektrums mit einer Datenbank ermittelt werden. Die Referenzmessung 610 kann vor und/oder nach der Messung, wie sie in Fig. 7 dargestellt ist durchgeführt werden.

Es kann eine Ausgabe der spektralen Information und/oder des (korrigierten) Spektrums 6030, 6140 des Mediums 300 erfolgen. Insbesondere kann die spektrale Information und/oder das Spektrum 6030, 6130, 6140 des Mediums 300 an den Benutzer der spektrometrischen Messvorrichtung 1000 ausgegeben werden. Diese Ausgabe kann beispielsweise optisch, haptisch oder akustisch erfolgen. Beispielsweise können die spektralen Informationen und/oder das Spektrum 6030, 6130, 6140 über eine Ausgabeeinheit beispielsweise ein Display, einen Touchscreen oder einen Lautsprecher ausgegeben werden. Alternativ oder ergänzend können die spektralen Informationen und/oder das Spektrum 6030, 6130, 6140 auf einem Smartphone angezeigt werden. Alternativ oder ergänzend kann das Verfahren 600 in Software, beispielsweise einer App und/oder Hardware in einem Smartphone oder einem anderen Gerät implementiert sein.

**Patentansprüche**

1. Optisches Element (50), umfassend

    • ein erstes lichtführendes Element (53) zum Führen einer von einer Beleuchtungseinheit (120) kommenden elektromagnetischen Strahlung zu einer Aufnahmevorrichtung (200), in welcher ein zu untersuchendes Medium (300) angeordnet ist und

• ein zweites lichtführendes Element (54) zum Führen eines Strahlungsanteils, welcher spektrale Informationen über das Medium umfasst, von der Aufnahmevorrichtung (200) zu einer Detektionseinheit (110),

**dadurch gekennzeichnet,**

• **dass** das erste lichtführende Element (53) eine erste Endfläche (530) aufweist, wobei die Aufnahmevorrichtung (200) an der ersten Endfläche (530) des ersten lichtführenden Elements (53) angeordnet oder anordenbar ist, und wobei die erste Endfläche (530) infolge einer Dimensionierung des ersten lichtführenden Elements (53) einen ersten Winkel (531) vorgibt, den ein von der Beleuchtungseinheit (120) kommender und von dem ersten lichtführenden Element (53) führbarer Strahl beim Austritt durch die erste Endfläche (530) aufweist, wobei der erste Winkel (531) dergestalt ist, dass ein Lichtpfad (503) des Strahls, im Medium (300) ein Polygon, insbesondere regelmäßiges Polygon, beschreibt,

• **dass** das zweite lichtführende Element (54) eine zweite Endfläche (540) aufweist, wobei die Aufnahmevorrichtung (200) an der zweiten Endfläche (540) des zweiten lichtführenden Elements (54) angeordnet oder anordenbar ist, wobei die zweite Endfläche (540) infolge einer Dimensionierung des zweiten lichtführenden Elements (54) einen zweiten Winkel (541) vorgibt, den ein von dem zweiten lichtführenden Element (54) führbarer Strahl beim Eintritt in das zweite lichtführende Element (54) durch die zweite Endfläche (540) aufweist, wobei der zweite Winkel (541) dergestalt ist, dass ein von dem polygonalen Lichtpfad (503) kommender Strahl von dem zweiten lichtführenden Element (54) aufnehmbar und der Detektionseinheit (110) zuführbar ist.

2. Optisches Element (50) nach Anspruch 1, **dadurch gekennzeichnet, dass** das optische Element (50) M-förmig ausgebildet ist, wobei das erste lichtführende Element (53) einen ersten Außenschenkel des M darstellt und das zweite lichtführende Element (54) einen zweiten Außenschenkel des M darstellt.

3. Optisches Element (50) nach einem der vorhergehenden Ansprüche, dass das erste lichtführende Element (53) und das zweite lichtführende Element (54) aus einem Material ausgebildet sind, welches einen Brechungsindex von 1,5 oder 1,6 oder einen Brechungsindex im Intervall zwischen 1,5 und 1,6 aufweist.

4. Optisches Element (50) nach einem der vorhergehenden Ansprüche, **dadurch gekennzeichnet, dass** das optische Element (50) aus einem optischen Polymer ausgebildet ist.

5. Optisches Element (50) nach einem der vorhergehenden Ansprüche, **dadurch gekennzeichnet, dass** der erste Winkel (531) größer oder gleich 42° ist.

6. Optisches Element (50) nach einem der vorhergehenden Ansprüche, **dadurch gekennzeichnet, dass** das optische Element (50) ein Verbindungselement (56) umfasst, wobei das erste lichtführende Element (53) und das zweite lichtführende Element (54) jeweils in oder an dem Verbindungselement (56) befestigt sind.

7. Optisches Element (50) nach einem der vorhergehenden Ansprüche, **dadurch gekennzeichnet, dass** das optische Element (50) im Strahlengang zwischen der Aufnahmevorrichtung (200) und einem Miniaturspektrometer (100), umfassend eine Beleuchtungseinheit (120), ein spektrales Element und eine Detektionseinheit (120), angeordnet oder anordenbar ist.

8. Optisches Element (50) nach Anspruch 6 und 7, **dadurch gekennzeichnet, dass** das Verbindungselement (56) an dem Miniaturspektrometer (100) angeordnet oder anordenbar ist.

9. Optisches Element (50) nach Anspruch 8, **dadurch gekennzeichnet, dass** das Verbindungselement (56) mindestens ein Steckelement zum Aufstecken des Verbindungselements (56) auf das Miniaturspektrometer (100) umfasst.

10. Spektrometrische Messvorrichtung (1000), welche zur Erfassung spektrometrischer Daten eines Mediums (300) eingerichtet ist, umfassend ein optisches Element (50) gemäß einem der vorhergehenden Ansprüche und ein Miniaturspektrometer (100), welches zur Erfassung der spektrometrischen Daten des Mediums (300) eingerichtet ist, wobei das Miniaturspektrometer (100)

• eine Beleuchtungseinheit (120) umfasst, welche eine optische Kopplung zu dem ersten lichtführenden Element (53) aufweist und dazu eingerichtet ist, elektromagnetische Strahlung zur Beleuchtung des Mediums (300) bereitzustellen, und

• die Detektionseinheit (110) umfasst, welche eine optische Kopplung zu dem zweiten lichtführenden Element (54) aufweist und dazu eingerichtet ist, vom Medium (300) kommende elektromagnetische Strahlung zu detektieren.

11. Verfahren (600) zur spektralen Analyse eines Mediums (300) mittels einer spektrometrischen Messvorrichtung (1000) nach Anspruch 10, **dadurch gekennzeichnet, dass** das Verfahren (600) die nachfolgenden Schritte aufweist:

    • Anordnen (601) des optischen Elements (50) an der Aufnahmevorrichtung (200)
    • Erfassen (602) spektraler Daten (6020) mit der Detektionseinheit (110) des Miniaturspektrometers (100)
    • Ermitteln (603) eines Spektrums (6030) und/oder einer spektralen Information aus den spektralen Daten zur Analyse des Mediums (300).

12. Verfahren (600) nach Anspruch 11, **dadurch gekennzeichnet, dass** eine Referenzmessung (610) nachfolgende Schritte umfasst:

    • Anordnen (611) des optischen Elements (50) an der Aufnahmevorrichtung (200) oberhalb eines Füllstands (402) des Mediums (300)
    • Erfassen (612) spektraler Hintergrunddaten (6120) mit der Detektionseinheit (110) des Miniaturspektrometers (100)
    • Ermitteln (613) eines Hintergrundspektrums (6130) aus den spektralen Hintergrunddaten (6120)

    und dass ein Ermitteln (614) eines korrigierten Spektrums (6140) des Mediums (300) zur Analyse des Mediums (300) durch Subtraktion (615) des Hintergrundspektrums (6130) von dem Spektrum (6030) des Mediums (300) erfolgt.

13. Computerprogrammprodukt, umfassend Befehle, die bewirken, dass die spektrometrische Messvorrichtung (1000) nach Anspruch 10 die Verfahrensschritte nach Anspruch 11 oder Anspruch 12 ausführt.

14. Computerlesbares Medium, auf dem das Computerprogramm nach Anspruch 13 gespeichert ist.

# Fig. 1

Fig. 2

Fig. 3

Fig. 4

EP 3 495 801 A1

# Fig. 5

Fig. 6

## Fig. 7

600

601    602    603

6020    6030

## Fig. 8

600

611    612    613    614    6030

6120    6130    615    6140

Europäisches
Patentamt

European
Patent Office

Office européen
des brevets

# EUROPÄISCHER RECHERCHENBERICHT

Nummer der Anmeldung

EP 18 20 6886

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 835 231 A (PIPINO ANDREW C R [US]) 10. November 1998 (1998-11-10) * Abbildung * * Spalte 1, Zeilen 12-18 * * Spalte 6, Zeilen 20-54 * ----- | 1-14 | INV. G01N21/3577 G01N21/25 G01J3/02 |
| X | US 2006/227327 A1 (MCNEAL MARK P [US] ET AL) 12. Oktober 2006 (2006-10-12) * Zusammenfassung; Abbildungen 4,5 * * Absatz [0037] * ----- | 1-14 | |
| X | EP 1 256 793 A1 (WTW WEILHEIM [DE]) 13. November 2002 (2002-11-13) | 1 | |
| A | * Spalte 4, Zeilen 34-48; Abbildung 1 * ----- | 11,13,14 | |

RECHERCHIERTE SACHGEBIETE (IPC)

G01N
G01J

Der vorliegende Recherchenbericht wurde für alle Patentansprüche erstellt

| Recherchenort | Abschlußdatum der Recherche | Prüfer |
|---|---|---|
| München | 29. April 2019 | Passier, Martinus |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 20 6886

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-04-2019

| Im Recherchenbericht angeführtes Patentdokument | Datum der Veröffentlichung | Mitglied(er) der Patentfamilie | Datum der Veröffentlichung |
|---|---|---|---|
| US 5835231 A | 10-11-1998 | KEINE | |
| US 2006227327 A1 | 12-10-2006 | KEINE | |
| EP 1256793 A1 | 13-11-2002 | EP 1256793 A1<br>US 2002167664 A1 | 13-11-2002<br>14-11-2002 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015180891 A1